# EUROPÄISCHE PATENTSCHRIFT

(11) **EP 3 015 699 B1**
(45) Veröffentlichungstag und Bekanntmachung des Hinweises auf die Patenterteilung: **05.12.2018**
(21) Anmeldenummer: 15190164.2
(22) Anmeldetag: 16.10.2015
(51) Int. Cl.: F02M 21/02, F02D 19/06, F02D 19/02, F16J 15/40

(54) **Gaszuführsystem mit einem Kontrollsystem und Zylinder für eine Hubkolbenbrennkraftmaschine, Hubkolbenbrennkraftmaschine, sowie Verfahren zum Betreiben einer Hubkolbenbrennkraftmaschine**
Gas feeding system with a control system and cylinder for a reciprocating piston engine, reciprocating piston engine, and method for operating a reciprocating piston engine
Système d'alimentation en gaz équipé d'un système de contrôle et cylindre pour un moteur à combustion interne à piston élévateur, moteur à combustion interne à piston élévateur, ainsi que procédé de fonctionnement d'un moteur à combustion interne à piston élévateur

(30) Priorität: 31.10.2014 EP 14191348
(43) Veröffentlichungstag der Anmeldung: 04.05.2016
(73) Patentinhaber: Winterthur Gas & Diesel AG, 8401 Winterthur (CH)
(72) Erfinder: Nylund, Ingemar, 66580 Kuni (FI); Ott, Marcel, 8406 Winterthur (CH); Hattar, Christer, 8523 Hagenbuch (CH); Hensel, Sebastian, 9500 Wil (CH)
(74) Vertreter: Intellectual Property Services GmbH

(56) Entgegenhaltungen:
- WO-A1-2013/116941
- DE-A1-102007 002 402
- DE-B- 1 259 634
- FR-A- 1 321 539
- JP-A- S5 218 507
- JP-A- 2014 047 705
- US-A- 3 062 198
- US-A- 4 574 754
- US-A- 5 136 986
- US-A- 5 383 647
- US-A- 5 752 489
- US-A1- 2013 000 607
- US-A1- 2013 133 624

## Beschreibung

Die Erfindung betrifft eine Gaszuführung mit einem Kontrollsystem für eine Hubkolbenbrennkraftmaschine, eine Hubkolbenbrennkraftmaschine und einen Zylinder mit einer Gaszuführung, im Speziellen für einen längsgespülten Zweitakt-Grossdieselmotor, sowie ein Verfahren zum Betreiben einer Hubkolbenbrennkraftmaschine gemäss dem Oberbegriff des unabhängigen Anspruchs der jeweiligen Kategorie.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit.

Ein weiterer wesentlicher Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte zunehmend verschärft und in naher Zukunft auch noch weiter verschärft werden. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen zunehmend problematischer wird, weil die Einhaltung der Abgasgrenzwerte immer schwieriger, technisch aufwändiger und damit teurer wird oder am Ende deren Einhaltung gar nicht mehr sinnvoll möglich ist, so dass die entsprechenden Motoren ausser Betrieb genommen oder zumindest aufwändig umgerüstet werden müssen.

In der Praxis besteht daher bereits seit langem das Bedürfnis nach sogenannten "Dual Fuel" Motoren, also Motoren, die mit zwei unterschiedlichen Treibstoffen betrieben werden können. Dabei soll häufig einerseits Gas, z.B. in Form eines Erdgases, beispielsweise ein sogenanntes "liquefied natural gas" (LNG), oder ein Gas in Form eines Autogases oder eines anderen zum Antrieb einer Brennkraftmaschine geeigneten Gases verbrannt werden, und andererseits soll auch noch ein anderer Treibstoff wie Benzin, Diesel, Schweröl oder ein anderer geeigneter flüssiger Treibstoff in ein und demselben Motor verbrannt werden können. Die Motoren können dabei sowohl Zweitakt- als auch Viertaktmotoren sein und es kann sich dabei um kleine, mittelgrosse aber auch um Grossmotoren, insbesondere auch um längsgespülte Zweitakt-Grossdieselmotoren handeln, wie sie zum Beispiel als Antriebsaggregate in Schiffen verwendet werden oder auch zur Herstellung elektrischer Energie in Kraftwerken häufig eingesetzt werden.

Aber auch reine Gasmotoren, also Motoren, die nur mit Gas und nicht alternativ noch mit Diesel, Schweröl oder einem anderen Brennstoff betreibbar sind werden zunehmend nachgefragt, insbesondere dann, wenn hohe Abgasstandards gefordert sind, die mit vertretbarem technischen Aufwand wirtschaftlich sinnvoll nur durch die Verbrennung von Gas eingehalten werden können. Ein solcher reiner Gasmotor ist beispielweise in der WO 2010 147071 A1 angegeben. Weiterer Stand der Technik findet sich z.B. in der DE 10 2010 005814 A1 oder in der DE 10 2007 002 402 A1.

Ganz gleich ob es sich um einen Dual-Fuel Motor oder um einen reinen Gasmotor handelt ist der Vorgang der Einbringung des Brennstoffs Gas in den Brennraum des Zylinders einer entsprechenden Hubkolbenbrennkraftmaschine von entscheidender Bedeutung für den zuverlässigen und sicheren Betrieb eines solchen Motors.

Das Gaszuführsystem zum Zuführen des Brennstoffs Gas in den Brennraum der Hubkolbenbrennkraftmaschine hat dabei ein Vielzahl von verschiedenen Funktionen, die sich zudem in gewisser Weise untereinander beeinflussen, so dass die verschiedenen Teil-Funktionalitäten genau aufeinander abgestimmt werden müssen. Ausserdem kann die genaue Ausgestaltung des Gaszuführsystems z.B. unter anderem von einem gegebenen oder bevorzugten Betriebszustand abhängen, beispielsweise ob der Motor meistens im Vollast- oder Teillastbereich betrieben wird oder häufig zwischen diesen Betriebsarten gewechselt werden muss. Oder ob es sich z.B. um einen Dual-Fuel Motor oder um einen reinen Gasmotor handelt. Oder die konkrete Ausgestaltung des Gaszuführsystems kann auch von der Baugrösse des Motors, dessen Leistung, Hubraum, bevorzugtem Drehzahlbereich oder anderen dem Fachmann an sich bekannten Bauvarianten oder Betriebszuständen einer Hubkolbenbrennkraftmaschine abhängen.

Insbesondere bei Zweitakt-Grossdieselmotoren hat dabei das Gaszuführsystem nicht nur die Funktion die in den Brennraum des Motors einzubringende Menge an Gas zu dosieren, so wie es bei Viertakt-Motoren oft eine ausreichende Anforderung ist. Bei Zweitakt-Grossdieselmotoren ist unter anderem neben weiteren Anforderungen die korrekte und zuverlässige Mischung des durch das Gaszuführsystem eingebrachten Gases mit der Spüllluft ein entscheidender Punkt.

Ein weiterer wesentlicher Punkt betrifft die Betriebssicherheit des Motors. Im Falle dass das Gaszuführsystem ganz oder teilweise versagt ist es möglich, dass z.B. eine viel zu grosse Menge an Gas in den Brennraum des Motors eingebracht wird, wenn keine geeigneten Sicherheitsmassnahmen getroffen werden, die das verhindern. Solche übermässig grossen Mengen Gas im Brennraum des Motors können z.B. zu unkontrollierten Explosionen im Abgassystem oder im Spülsystem eines Grossdieselmotors führen, was dazu führen kann, dass die entsprechenden Komponenten überhitzt oder gar beschädigt werden, so dass im schlimmsten Fall die ganze Maschine ausfallen kann, was insbesondere bei Schiffen auf hoher See fatale Folgen und sogar den Verlust des ganzen Schiffes zur Folge haben kann.

Aber auch wenn die Folgen einer solchen Fehlfunktion nicht so dramatisch sind können auch weniger gravierende Störungen dieser Art unerwünschte Nachteile mit sich bringen.

Wenn beispielweise aufgrund eines Defektes das Gaszuführsystem jeweils eine etwas zu grosse oder eine etwas zu kleine Menge an Gas in den Brennraum des Motors eingebracht wird, kann das die Abgaswerte, wie beispielweise den Stickoxidgehalt oder andere Abgaswerte deutlich negativ beeinflussen.

Oder aber beim Betrieb mit einem Gas, z.B. mit dem oben erwähnten LNG, kann es bei einer Fehlfunktion des Gaszuführsystems beispielweise zu einer unvollständigen Verbrennung und damit zu einem dem Fachmann als CH₄-Schlupf bekannten Phänomen führen, wobei zu hohe Werte an CH₄ erreicht werden. Wenn ein entsprechender Motor nun mit Gas, also in einem Gasmodus betrieben wird, können die unter einer Fehlfunktion des Gaszuführsystems bei der Verbrennung entstehenden Abgase unter anderem nicht unerhebliche Mengen Methan und / oder Formaldehyd Emissionen enthalten, die zum Beispiel aus einer spontanen Abkühlung der Verbrennungsflamme ("flame quenching") beim Verbrennungsvorgang an der Zylinderwand resultieren können oder in einer Phase frei werden können, in der die Spülung des Zylinders mit Frischluft bei gleichzeitig nicht geschlossenem Auslassventil stattfindet oder in anderer Weise frei werden können.

Ähnliche Effekte können auftreten, wenn das Gas in nicht geeigneter Weise, z.B. unter einem ungeeigneten Druck oder in einer ungeeigneten Geometrie des Einspritzstrahls, unter einem ungeeigneten Winkel, an einer ungeeigneten Stelle in den Brennraum oder in irgendeiner anderen Weise ungeeignet in den Brennraum des Motors eingebracht wird.

Wenn durch solche Betriebszustände z.B. die Methan Konzentration im Abgas entsprechend hoch ist, kann dadurch der sichere Betrieb des Motors ebenfalls beeinträchtigt werden. Zum Beispiel besteht die Gefahr, dass sich das Methan im Abgassystem, z.B. im Abgassammelrohr bzw. in einem Bereich vor oder gar im Turbolader entzündet. Im schlimmsten Fall kann die Entzündung des Methans im Abgassystem zur Beschädigung entsprechender Komponenten führen, die den schädlichen Wirkungen der Methangasentzündung ausgesetzt sind. Ausserdem ist Methan ein überaus wirksames Treibhausgas, das bekannterweise mindestens 25 mal wirksamer ist als Kohlendioxid, was einen signifikanten negativen Einfluss auf die Berechnung des sogenannten "Energy Efficiency Design Index" (EEDI) haben kann.

Auch können die häufig eingesetzten und sehr empfindlichen Oxidationskatalysatoren durch eine Fehlfunktion des Abgaszuführsystems und die daraus resultieren Folgen erheblich beeinträchtigt und im schlimmsten Fall bereits nach kurzer Zeit irreparabel beschädigt werden, wodurch der weitere sichere und zuverlässige Betrieb des Motors zumindest in Frage gestellt ist, im schlimmsten Fall verunmöglicht wird.

Die Aufgabe der Erfindung ist es somit einen Zylinder, insbesondere einen Zylinderliner für einen längsgespülten Zweitakt-Grossdieselmotor mit einem Gaszuführsystem, bzw. eine Hubkolbenbrennkraftmaschine, insbesondere einen längsgespülten Zweitakt-Grossdieselmotor mit einem Gaszuführsystem zur Verfügung zu stellen, das bzw. welche flexibel an unterschiedliche Motoren bzw. unterschiedliche Betriebszustände und Anforderungen anpassbar ist bzw. sind, so dass dies eventuell auch in bestimmten Fällen in älteren Motoren nachgerüstet werden kann, bzw. bestehende Motoren flexibel und einfach auf andere Betriebsarten oder Betriebszustände umgerüstet bzw. umgestellt werden können. Dabei soll das sichere Einbringen des Gases in den Brennraum der Hubkolbenbrennkraftmaschine zuverlässig gewährleistet sein und insbesondere, aber nicht nur im Fall von langsgespülten Zweitakt-Grossdieselmotoren im Brennraum eine optimale Mischung mit der Spülluft gewährleistet werden. Ausserdem sollen das Gaszuführsystem und seine Komponenten zuverlässig gegen Leckagen gesichert sein.

Die diese Aufgaben lösenden Gegenstände der Erfindung sind durch die Merkmale der unabhängigen Ansprüche 1 und 13 gekennzeichnet.

Die jeweiligen abhängigen Ansprüche beziehen sich auf besonders vorteilhafte Ausführungsformen der Erfindung.

Die Erfindung betrifft somit einen Zylinder für eine Hubkolbenbrennkraftmaschine, insbesondere längsgespülter Zweitakt-Grossdieselmotor, wobei ein Gaszuführsystem ein Gaseinlassventil mit einer Gaseinlassdüse umfasst, die so ausgestaltet ist, dass sie in einer Zylinderwand eines Zylinders der Hubkolbenbrennkraftmaschine derart anordenbar ist, dass ein als Treibstoff bereitgestelltes Brenngas im Einbauzustand des Gaszuführsystems mittels der Gaseinlassdüse einem Brennraum des Zylinders zuführbar ist. Dabei umfasst das Gaseinlassventil einen in einem Ventilgehäuse angeordneten Druckraum, in welchem das Brenngas über eine Gaszuführung zur Bevorratung und Zufuhr in die Gaseinlassdüse im Betriebszustand bereitgestellt werden kann. Im Druckraum ist ein Ventilkörper mit einem an einem Ventilschaft angeordneten Ventilteller sowie einem Ventilsitz vorgesehen, welcher Ventilsitz in einem geschlossenen Zustand des Ventilkörpers mit dem Ventiltellers derart dichtend zusammenwirkt, dass die Zufuhr des Brenngases aus dem Druckraum in die Gaseinlassdüse unterbunden ist, und der Ventilteller mittels eines mit dem Ventilschaft wirkverbundenen Ventilantriebs vom Ventilsitz abhebbar ist, so dass das Brenngas in einem geöffneten Zustand des Ventilkörpers aus dem Druckraum am Ventilteller vorbei der Gaseinlassdüse zuführbar ist. Erfindungsgemäss ist zur Überwachung eines Brenngasflusses in den Brennraum (42) ein Kontrollsystem zur Bestimmung einer Position des Ventilkörpers (6) vorgesehen.

Durch das erfindungsgemässe Kontrollsystem wird die Betriebssicherheit des Motors entscheidend verbessert. In dem Fall, dass das Gaszuführsystem ganz oder teilweise versagt ist es möglich, dass z.B. eine viel zu grosse Menge an Gas in den Brennraum des Motors eingebracht wird, wenn keine geeigneten Sicherheitsmassnahmen getroffen werden, die das verhindern. Solche übermässig grossen Mengen Brenngas im Brennraum des Motors können z.B. zu unkontrollierten Explosionen im Abgassystem oder im Spülsystem eines Grossdieselmotors führen, was dazu führen kann, dass die entsprechenden Komponenten überhitzt oder gar beschädigt werden, so dass im schlimmsten Fall die ganze Maschine ausfallen kann, was insbesondere bei Schiffen auf hoher See fatale Folgen und sogar den Verlust des ganzen Schiffes zur Folge haben kann.

Aber auch wenn die Folgen einer solchen Fehlfunktion nicht so dramatisch sind können auch weniger gravierende Störungen dieser Art unerwünschte Nachteile mit sich bringen.

Wenn beispielweise aufgrund eines Defektes das Gaszuführsystem jeweils eine etwas zu grosse oder eine etwas zu kleine Menge an Gas in den Brennraum des Motors eingebracht wird, kann das die Abgaswerte, wie beispielweise den Stickoxidgehalt oder andere Abgaswerte deutlich negativ beeinflussen.

Oder aber beim Betrieb mit einem Gas, z.B. mit dem oben erwähnten LNG, kann es bei einer Fehlfunktion des Gaszuführsystems beispielweise zu einer unvollständigen Verbrennung und damit zu einem dem Fachmann als CH₄-Schlupf bekannten Phänomen führen, der zu hohe Werte aufweist. Wenn ein entsprechender Motor nun mit Gas, also in einem Gasmodus betrieben wird, können die unter einer Fehlfunktion des Gaszuführsystems bei der Verbrennung entstehenden Abgase unter anderem eine nicht unerhebliche Menge Methan und / oder Formaldehyd Emissionen enthalten, die zum Beispiel aus einer spontanen Abkühlung der Verbrennungsflamme ("flame quenching") beim Verbrennungsvorgang an der Zylinderwand resultieren können oder in einer Phase frei werden können, in der die Spülung des Zylinders mit Frischluft bei gleichzeitig nicht geschlossenem Auslassventil stattfindet oder in anderer Weise frei werden können.

Ähnliche Effekte können auftreten, wenn das Gas in nicht geeigneter Weise, z.B. unter einem ungeeigneten Druck oder in einer ungeeigneten Geometrie, des Einspritzstrahls, unter einem ungeeigneten Winkel, an einer ungeeigneten Stelle in den Brennraum oder in irgendeiner anderen Weise ungeeignet in den Brennraum des Motors eingebracht wird.

Wenn durch solche Betriebszustände z.B. die Methan Konzentration im Abgas entsprechend hoch ist, kann dadurch der sichere Betrieb des Motors ebenfalls beeinträchtigt werden. Zum Beispiel besteht die Gefahr, dass sich das Methan im Abgassystem, z.B. im Abgassammelrohr bzw. in einem Bereich vor oder gar im Turbolader entzündet. Im schlimmsten Fall kann die Entzündung des Methans im Abgassystem zur Beschädigung entsprechender Komponenten führen, die den schädlichen Wirkungen der Methangasentzündung ausgesetzt sind. Ausserdem ist Methan ein überaus wirksames Treibhausgas, das bekannterweise mindestens 25 mal wirksamer ist als Kohlendioxid, was einen signifikanten negativen Einfluss auf die Berechnung des sogenannten "Energy Efficiency Design Index" (EEDI) haben kann.

Auch können die häufig eingesetzten und sehr empfindlichen Oxidationskatalysatoren durch eine Fehlfunktion des Abgaszuführsystems und die daraus resultieren Folgen erheblich beeinträchtigt und im schlimmsten Fall bereits nach kurzer Zeit irreparabel beschädigt werden, wodurch der weitere sichere und zuverlässige Betrieb des Motors zumindest in Frage gestellt ist, im schlimmsten Fall verunmöglicht wird.

Diese zum Teil sehr gravierenden Probleme können durch die vorliegende Erfindung erstmals zuverlässig vermieden werden.

Dazu umfasst ein erfindungsgemässes Gaszuführsystem zur Überwachung eines Brenngasflusses in den Brennraum das Kontrollsystem zur Bestimmung einer Position des Ventilkörpers, wobei das Kontrollsystem ein Wegsensor ist, insbesondere ein elektrischer oder elektromagnetischer Wegsensor, im Speziellen ein induktiver, kapazitiver oder optischer Wegsensor, so dass die jeweilige Stellung des Ventilkörpers, insbesondere ob das Gaseinlassventil geöffnet oder geschlossen ist, jederzeit zuverlässig detektiert werden kann.

Erfindungsgemäß ist das Kontrollsystem dabei mit einer Überwachungseinheit signalverbunden, so dass die Position des Ventilkörpers im Betriebszustand von der Überwachungseinheit erfasst werden kann, und so eine Brenngaszufuhr zur Gaseinlassdüse in Abhängigkeit von einem Kurbelwinkel der Hubkolbenbrennkraftmaschine und / oder in Abhängigkeit von einer Stellung eines Gaswechselventils der Hubkolbenbrennkraftmaschine unterbunden werden kann. Damit ist es durch die Erfindung erstmals möglich, eine Fehlfunktion des Gaszuführsystems nicht nur zu detektieren, sondern abhängig von der Fehlfunktion ein Sicherheitsprotokoll in Gang zu setzen, so das z.B. die Brenngaszufuhr zum Gaszuführsystem automatisch unterbunden und die Hubkolbenbrennkraftmaschine bevorzugt automatisch abgeschaltet wird, besonders bevorzugt automatisch auf einen Betrieb mit einem alternativen Brennstoff wie beispielweise Dieselöl oder Schweröl umgeschaltet wird.

Das Gaseinlasssystem ist dabei bevorzugt so ausgestaltet, dass der Ventilantrieb zum Antrieb des Ventilschafts ein mechanischer, elektrischer, oder pneumatischer Ventilantrieb, insbesondere ein hydraulischer Ventilantrieb ist, wobei zum Schliessen des Ventilkörpers besonders bevorzugt eine gegen den Ventilantrieb wirkende Rückstelleinrichtung, insbesondere in Form einer Rückstellfeder vorgesehen ist.

Der Ventilschaft ist einem speziellen, für die Praxis besonders wichtigen Ausführungsbeispiel in einer Führungsbohrung eines Schaftgehäuses geführt. Dabei ist die Führungsbohrung zur Abdichtung gegen den Gasdruck des Brenngases im Druckraum mit einem unter einem Abdichtdruck stehenden Hydrauliköl beaufschlagbar, welcher Abdichtdruck bevorzugt höher ist als ein Brenngasdruck des Brenngases im Druckraum, so dass ein Eindringen des Brenngases in die Führungsbohrung bzw. ein Durchströmen des Brenngases durch die Führungsbohrung im Wesentlichen verhinderbar ist.

Dass der Abdichtdruck bevorzugt höher ist als ein Brenngasdruck des Brenngases im Druckraum ist deshalb notwendig, weil kein Brenngas entlang des Ventilschafts unkontrolliert in weitere Komponenten des Gaszuführsystems, insbesondere nicht in einen hydraulischen Antrieb des Ventilschafts eintreten darf, also keine bzw. nur sehr gut kontrollierte kleine, technisch unwesentliche Gas-Lecks am bzw. entlang des Ventilschafts auftreten dürfen. Daher muss der Ventilschaft entsprechend zuverlässig abgedichtet werden, was bei den bisherigen System z.B. mit entsprechenden Dichtungsringen versucht wurde, was sich aber alles in allem eher als nachteilig erwiesen hat, weil die Dichtringe gegenüber dem unter Druck stehenden Brenngas entweder keine ausreichende Dichtwirkung zeigen oder auch z.B. zu schnell durch im Betriebszustand auftretende Reibungsphänomene verschleissen und damit letztlich zu teuer und zu unzuverlässig sind.

Auch diese Probleme werden durch die vorliegende Erfindung erstmals zuverlässig vermieden.

Bei einem für die Praxis besonders wichtigen Ausführungsbeispiel ist die Gaseinlassdüse lösbar mit dem Gaseinlassventil und austauschbar mit der Zylinderwand verbunden und eine Düsenachse der Gaseinlassdüse ist derart unter einem vorgebbaren Winkel in Bezug auf eine Ventilachse des Gaseinlassventils angeordnet, dass das Brenngas im Betriebs- und Einbauzustand des Gaszuführsystems unter einem von Null verschiedenen vorgebbaren Winkel in Bezug auf eine radiale Richtung, und / oder in Bezug auf eine axiale Richtung des Zylinders in den Brennraum des Zylinder einspritzbar ist.

Mit dem Einspritzwinkel wird dann derjenige Winkel bezeichnet, welcher der Supplementärwinkel zu dem Winkel zwischen der Düsenachse der Gaseinlassdüse und der Ventilachse des Gaseinlassventils ist, das heisst, der Einspritzwinkel und der Winkel zwischen Düsenachse und Ventilachse ergänzen sich zu 180°. Bevorzugt beträgt der Einspritzwinkel zwischen 10 Grad und 80 Grad, besonders bevorzugt zwischen 10 Grad und 35 Grad, im speziellen ist der Einspritzwinkel ca. 22.5 Grad

Ein spezielles erfindungsgemässes Gaszuführsystem umfasst somit ein Ventil, das als wesentliche Elemente einen Ventilschaft mit einem Ventilteller aufweist, wobei durch das meist hydraulisch gesteuerte Ventil die gewünschte Menge an Gas über den Ventilteller, der im geschlossenen Zustand dichtend mit einem Ventilsitz zusammenwirkt, und eventuell durch Düsen und einen geeigneten Düsenkanal in den Brennraum eingebracht wird.

Damit steht durch die vorliegende Erfindung auch erstmals ein Gaszuführsystem zum Zuführen des Brennstoffs Gas in den Brennraum einer Hubkolbenbrennkraftmaschine zur Verfügung, das durch seine zweiteilige Ausgestaltung eine bisher nicht gekannte Flexibilität aufweist. Dadurch, dass die Gaseinlassdüse bevorzugt lösbar mit dem Gaseinlassventil und bevorzugt austauschbar mit der Zylinderwand verbunden ist, kann zum Beispiel je nach Anforderungen an die speziellen Brennbedingungen im Brennraum der Hubkolbenbrennkraftmaschine die Gaseinlassdüse separat vom Gaseinlassventil ausgetauscht werden, so dass verschiedene Einspritzbedingungen zum Einspritzen des Brenngases in den Brennraum einfach realisiert werden können und optimal auf wechselnde Anforderungen abgestimmt werden können.

Darüber hinaus in einem weiteren speziellen Ausführungsbeispiel eine Düsenachse der Gaseinlassdüse der vorliegenden Erfindung derart unter einem vorgebbaren Winkel in Bezug auf eine Ventilachse des Gaseinlassventils angeordnet sein, dass das Brenngas im Betriebs- und Einbauzustand des Gaszuführsystems unter einem von Null verschiedenen vorgebbaren Einspritzwinkel in den Brennraum des Zylinder einspritzbar ist. Das ist daher von besonderer Bedeutung, weil dadurch den beiden Hauptfunktionen der Gaseinlassdüse gleichzeitig Rechnung getragen wird: einerseits ist durch Verwendung einer an die Bedingungen im Brennraum angepassten Gaseinlassdüse eine exakte Dosierung unter den verschiedensten Betriebsbedingungen möglich. Und andererseits kann durch die korrekte Wahl des Einspritzwinkels und die richtige Wahl der Geometrie des Einspritzstrahls bzw. mehrerer Einspritzstrahlen eine optimale Mischung von Spülluft und Brenngas erreicht werden, so dass eine optimale Verbrennung gewährleistet ist, so dass insbesondere die geforderten Abgasnormen eingehalten werden können und andererseits der Verbrauch an Treibstoff minimiert werden kann.

Das heisst, eine Vielzahl von verschiedenen Funktionen, die sich zudem in gewisser Weise untereinander beeinflussen, können durch die vorliegende Erfindung erstmals genau aufeinander abgestimmt werden. So kann z.B. durch die genaue Ausgestaltung des Gaszuführsystems, im speziellen durch die Wahl einer geeigneten Gaseinlassdüse, unter anderem auf einen gegebenen oder bevorzugten Betriebszustand optimal abgestellt werden, beispielsweise ob der Motor meistens im Vollast- oder Teillastbereich betrieben wird oder häufig zwischen diesen Betriebsarten gewechselt werden muss. Oder die Gaseinlassdüse kann optimal in Abhängigkeit davon gewählt werden, ob es sich z.B. um einen Dual-Fuel Motor oder um einen reinen Gasmotor handelt. Oder die konkrete Ausgestaltung des Gaszuführsystems kann auch z.B. erstmals flexibel auf Baugrösse des Motors, dessen Leistung, Hubraum, bevorzugten Drehzahlbereich oder andere dem Fachmann an sich bekannten Bauvarianten oder Betriebszustände der Hubkolbenbrennkraftmaschine eingestellt werden, ohne dass das gesamte Gaszuführsystem angepasst oder ausgewechselt werden müsste. Durch Verwendung eines erfindungsgemässen Gaszuführsystems braucht somit nur noch z.B. die Gaseinlassdüse geeignet gewählt und entsprechend ausgetauscht werden, während das Gaseinlassventil als solches beibehalten werden kann.

Insbesondere bei Zweitakt-Grossdieselmotoren hat dabei das Gaszuführsystem nicht nur die Funktion, die in den Brennraum des Motors einzubringende Menge an Gas zu dosieren, so wie es bei Viertakt-Motoren oft eine ausreichende Anforderung ist. Bei Zweitakt-Grossdieselmotoren ist unter anderem wie bereits erwähnt neben weiteren Anforderungen die korrekte und zuverlässige Mischung des durch das Gaszuführsystem eingebrachten Gases mit der Spülluft ein entscheidender Punkt, dem durch das erfindungsgemässe Gaszuführsystem erstmals vollumfänglich Rechnung getragen wird.

Als weitere Massnahme kann gemäss der Erfindung die Gaseinlassdüse zur Verbesserung der Mischung des Brenngases mit der Spülluft bzw., um das Einbringen des Brenngases in den Zylinder weiter zu optimieren, die Gaseinlassdüse auch eine Mehrzahl an Düsenöffnungen aufweisen.

Auch ist es möglich, dass zwei Düsenöffnungen derart verschieden ausgerichtet sind, dass das Brenngas unter zwei verschiedenen Einspritzwinkeln in den Brennraum einbringbar ist, wodurch z.B. eine bessere Verteilung im Brennraum erreicht werden kann.

Oder aber alternativ oder gleichzeitig können zwei Düsenöffnungen derart verschieden ausgebildet sein, dass das Brenngas durch die zwei Düsenöffnungen mit zwei verschiedenen Einspritzmengen und / oder mit zwei verschiedenen Strömungsgeschwindigkeiten und / oder mit zwei verschiedenen Strahlgeometrien in den Brennraum einbringbar ist.

Die Erfindung betrifft einen Zylinder, insbesondere Zylinderliner eines längsbespülten Zweitakt-Grossdieselmotors mit einem oben eingehend beschriebenen Gaszuführsystem, wobei das Gaszuführsystem besonders bevorzugt am Zylinder in einem Bereich zwischen einem oberen Totpunkt und einem unteren Totpunkt eines Kolbens der Hubkolbenbrennkraftmaschine vorgesehen ist, im Speziellen in einem Bereich des Zylinders, der vom oberen Totpunkt 20% bis 80%, bevorzugt 45% bis 65%, besonders bevorzugt 50% bis 60% des Abstands zwischen oberem Totpunkt und unterem Totpunkt entfernt ist. Es hat sich nämlich gezeigt, dass dadurch nicht nur eine noch optimalere Mischung des Brenngases mit der Spülluft erreichen lässt. Auch kann dadurch vermieden werden, dass Brenngas in heisse, sich noch im Zylinderliner befindliche Abgase eingespritzt wird, wodurch sich das Brenngas vorzeitig entzünden könnte, wie es der Fall sein kann, wenn sich das Gaszuführsystem wie aus dem Stand der Technik in der Nähe des oberen Totpunkts am Zylinderliner befindet.

Die Erfindung betrifft des Weiteren eine Hubkolbenbrennkraftmaschine mit einem oben beschriebenen Gaszuführsystem, wobei die Hubkolbenbrennkraftmaschine besonders bevorzugt ein Dual-Fuel Motor zur Verbrennung des Brenngases und alternativ zur Verbrennung eines weiteren Brennstoffs, insbesondere zur Verbrennung von Diesel oder Schweröl ist.

In einem anderen Ausführungsbeispiel kann eine erfindungsgemässe Hubkolbenbrennkraftmaschine aber selbstverständlich auch ein reiner Gasmotor sein, mit welchem nur Brenngas, also kein anderer Treibstoff verbrannt werden kann.

Nicht zuletzt betrifft die Erfindung auch ein Verfahren zum Betreiben einer Hubkolbenbrennkraftmaschine mit einem erfindungsgemässen Gaszuführsystem, wobei wie bereits beschrieben im Betriebszustand eine Fehlfunktion des Gaszuführsystems detektiert wird, die Brenngaszufuhr zum Gaszuführsystem unterbunden wird und die Hubkolbenbrennkraftmaschine bevorzugt automatisch abgeschaltet, besonders bevorzugt automatisch auf einen Betrieb mit einem alternativen Brennstoff wie beispielweise Dieselöl oder Schweröl umgeschaltet wird.

Im Folgenden wird die Erfindung an Hand der schematischen Zeichnung näher erläutert. Es zeigt:

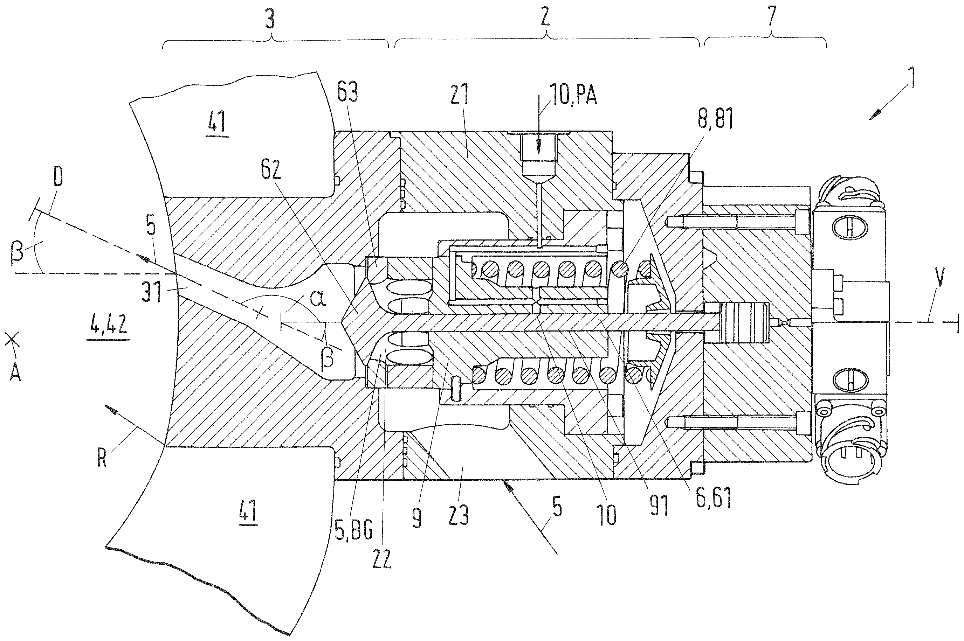

- Fig. 1: ein besonders bevorzugtes Ausführungsbeispiel eines erfindungsgemässen Gasführsystems mit Gaseinlassventil und Gaseinlassdüse.

Fig. 1 zeigt in einer schematischen Darstellung zur Erläuterung des Zusammenwirkens der unterschiedlichen Komponenten den prinzipiellen Aufbau eines erfindungsgemässen Gaszuführsystems an einem Zylinderliner einer Hubkolbenbrennkraftmaschine, die hier exemplarisch als Zweitakt-Grossdieselmotor mit Längsspülung ausgebildet ist und aus Gründen der Übersichtlichkeit aber nicht näher im Detail dargestellt ist, da dem Fachmann der prinzipielle Aufbau eines längsgespülten Zweitakt-Grossdieselmotors hinlänglich bekannt ist. Im Folgenden wird dabei das erfindungsgemässe Gaszuführsystem gesamthaft mit dem Bezugszeichen 1 bezeichnet.

Das spezielle Ausführungsbeispiel eines erfindungsgemässen Gaszuführsystem 1 gemäss Fig. 1, eingebaut in einen längsgespülten Zweitakt-Grossdieselmotor, umfasst ein Gaseinlassventil 2 mit einer Gaseinlassdüse 3, die so ausgestaltet ist und in einer Zylinderwand 41 eines Zylinders 4 der Hubkolbenbrennkraftmaschine angeordnet ist, dass ein als Treibstoff bereitgestelltes Brenngas 5 im Einbauzustand des Gaszuführsystems 1 mittels der Gaseinlassdüse 3 einem nicht näher dargestellten Brennraum 42 des Zylinders 4 zuführbar ist. Dabei umfasst das Gaseinlassventil 2 einen in einem Ventilgehäuse 21 angeordneten Druckraum 22, in welchem das Brenngas 5 über eine Gaszuführung 23 zur Bevorratung und Zufuhr in die Gaseinlassdüse 3 im Betriebszustand bereitgestellt werden kann.

Im Druckraum 22 selbst bzw. im Bereich des Druckraums 22 ist ein Ventilkörper 6 mit einem an einem Ventilschaft 61 angeordneten Ventilteller 62 sowie einem Ventilsitz 63 vorgesehen, welcher Ventilsitz 63 in einem geschlossenen Zustand des Ventilkörpers 6 mit dem Ventilteller 2 derart dichtend zusammenwirkt, dass die Zufuhr des Brenngases 5 aus dem Druckraum 22 in die Gaseinlassdüse 3 unterbunden ist.

Dazu ist der Ventilteller 2 mittels eines mit dem Ventilschaft 61 wirkverbundenen Ventilantriebs 7 vom Ventilsitz 3 abhebbar, so dass das Brenngas 5 in einem geöffneten Zustand des Ventilkörpers 6 aus dem Druckraum 22 am Ventilteller 2 vorbei der Gaseinlassdüse 3 zuführbar ist.

Gemäss der vorliegenden Erfindung ist die Gaseinlassdüse 3 lösbar mit dem Gaseinlassventil 2 und austauschbar mit der Zylinderwand 41 verbunden, wobei eine Düsenachse D der Gaseinlassdüse 3 derart unter einem vorgebbaren Winkel α in Bezug auf eine Ventilachse V des Gaseinlassventils 2 angeordnet ist, dass das Brenngas 5 im Betriebs- und Einbauzustand des Gaszuführsystems 1 unter einem von Null verschiedenen vorgebbaren Winkel in Bezug auf eine radiale Richtung R und / oder in Bezug auf eine axiale Richtung A des Zylinders 4 in den Brennraum 42 des Zylinder 4 einspritzbar ist.

Bezüglich der radialen Richtung wird mit dem Einspritzwinkel β dabei derjenige Winkel bezeichnet, welcher der Supplementärwinkel zu dem Winkel α zwischen der Düsenachse D der Gaseinlassdüse 3 und der Ventilachse V des Gaseinlassventils 2 ist, das heisst, der Einspritzwinkel β und der Winkel α zwischen Düsenachse D und Ventilachse V ergänzen sich zu 180°, somit gilt β = 180°-α. Bevorzugt beträgt der Einspritzwinkel β zwischen 10 Grad und 80 Grad, besonders bevorzugt zwischen 10 Grad und 35 Grad, im speziellen ist der Einspritzwinkel ca. 22.5 Grad.

Bezüglich der axialen Richtung ist der Winkel β vorzugsweise 90°, das heisst das Brenngas 5 wird vorzugsweise senkrecht zur axialen Richtung A, also in der Zeichenebene von Fig. 1 bzw. parallel zur Oberfläche des Kolbens eingespritzt.

Die relativ einfache Gaseinlassdüse 3 hat dabei nur eine Düsenöffnung 31. In einem anderen speziellen Ausführungsbeispiel kann die Gaseinlassdüse 3 aber durchaus auch eine Mehrzahl an Düsenöffnungen 31 aufweisen, wobei z.B. zwei Düsenöffnungen 31 derart verschieden ausgerichtet sein können, dass das Brenngas 5 unter zwei verschiedenen Einspritzwinkeln in den Brennraum 42 einbringbar ist, und / oder wobei zwei Düsenöffnungen 31 auch oder gleichzeitig derart verschieden ausgebildet sein können, dass das Brenngas 5 durch die zwei Düsenöffnungen 31 mit zwei verschiedenen Einspritzmengen und / oder mit zwei verschiedenen Strömungsgeschwindigkeiten und / oder mit zwei verschiedenen Strahlgeometrien in den Brennraum 42 einbringbar ist.

Des Weiteren kann in der Praxis ein in Fig. 1 nicht explizit dargestelltes Kontrollsystem zur Überwachung eines Brenngasflusses in den Brennraum 42 und zur Bestimmung einer Position des Ventilkörpers 6 vorgesehen sein, welches Kontrollsystem besonders bevorzugt ein Wegsensor ist, insbesondere ein elektrischer oder elektromagnetischer Wegsensor, im Speziellen ein induktiver, kapazitiver oder optischer Wegsensor. Das Kontrollsystem ist mit einer Überwachungseinheit signalverbunden, so dass die Position des Ventilkörpers 6 im Betriebszustand von der Überwachungseinheit erfasst werden kann, und eine Brenngaszufuhr zur Gaseinlassdüse 3 in Abhängigkeit von einem Kurbelwinkel der Hubkolbenbrennkraftmaschine und / oder in Abhängigkeit von einer Stellung eines Gaswechselventils der Hubkolbenbrennkraftmaschine automatisch unterbunden werden kann.

Der Ventilantrieb 7 zum Antrieb des Ventilschafts 61 ist bei dem Ausführungsbeispiel gemäss Fig. 1 ein hydraulischer Ventilantrieb 7, dessen Funktion und Wirkungsweise dem Fachmann grundsätzlich bekannt sind. Zum Schliessen des Ventilkörpers 6 ist eine gegen den Ventilantrieb 7 wirkende Rückstelleinrichtung 8 in Form einer Rückstellfeder 81 vorgesehen.

Der Ventilschaft 61 ist in einer Führungsbohrung 91 eines Schaftgehäuses 9 geführt, wobei die Führungsbohrung 91 mit einem unter einem Abdichtdruck PA stehenden Hydrauliköl 10 beaufschlagbar ist, welcher Abdichtdruck PA hier höher ist als ein Brenngasdruck BG des Brenngases 5 im Druckraum 22, so dass ein Eindringen des Brenngases 5 in die Führungsbohrung 91 im Wesentlichen verhinderbar ist.

Das erfindungsgemässe Gaszuführsystem ist vorzugsweise als ein Niederdruck (low pressure) -Gassystem ausgestaltet. Damit ist gemeint, dass der Einspritzdruck, mit welchem das Brenngas 5 in den Brennraum 42 des Zylinders 4 eingespritzt wird, höchsten 100 bar (10 MPa). Vorzugsweise ist der Einspritzdruck maximal 50 bar (5 MPa) und besonders bevorzugt höchstens 20 bar (2 MPa). Während des Betriebs der Brennkraftmaschine ist der Gasdruck, also der Druck, mit welchem das Brenngas in den Zylinder eingespritzt wird, üblicherweise nicht konstant, sondern kann beispielsweise in Abhängigkeit von der Last oder Drehzahl der Brennkraftmaschine variieren.

Bei dem erfindungsgemässen Gaszuführsystem bzw. bei dem erfindungsgemässen Zylinder wird in einer bevorzugten Ausführungsform ein möglichst geringer Gasdruck für die Einspritzung des Brenngases 5 in den Brennraum 42 angestrebt. So kann der maximale Einspritzdruck für das Brenngas 5 beispielsweise auch nur 15 bar oder sogar noch weniger betragen.

Ein möglichst geringer Einspritzdruck des Brenngases 5 hat natürlich unter Sicherheitsaspekten grosse Vorteile. Zudem muss das gesamte Gaszuführsystem nur für solche vergleichsweise geringen Betriebsdrücke ausgelegt sein, was insbesondere im Hinblick auf die Abdichtung des Systems, die auftretenden Kräfte, beispielsweise am Ventilsitz 63 und auch die Ausgestaltung des Ventilantriebs 7 sowie die Druckbelastung der gasführenden Leitungen bzw. ihrer Verbindungen besonders vorteilhaft ist. Auch bedarf es keiner besonderen Hochdruckkompressoren, mit denen das Brenngas 5 wie im Falle von Hochdrucksystemen auf einen Betriebsdruck von beispielsweise 350 bar oder noch höher komprimiert werden muss, was auch unter wirtschaftlichen und Kostenaspekten vorteilhaft ist.

Gerade im Hinblick auf einen möglichst geringen Einspritzdruck des Brenngases 5 ist erfindungsgemäß das Gaseinlassventil 2 bzw. die Gaseinlassdüse 3 in der Zylinderwand 41 bzw. im Zylinderliner angeordnet um einen möglichst grossen Abstand vom oberen Totpunkt der Kolbenbewegung haben. Hierdurch lässt es sich nämlich erreichen, dass der Kompressionsdruck im Zylinder, gegen den das Brenngas 5 ja eingespritzt werden muss, noch vergleichsweise gering ist. Wenn bei einem längsgespülten Zweitakt-Grossdieselmotor der Kolben bei der Abwärtsbewegung die Spülluftschlitze freigibt, beginnt die Spülluft in den Zylinder einzuströmen. Dies geschieht solange, bis der Kolben bei seiner anschliessenden Aufwärtsbewegung die Spülluftschlitze wieder vollkommen verschlossen hat. Erst wenn dann - in der Regel nach dem Verschliessen der Spülluftschlitze - das Gaswechselventil (hier das Auslassventil) geschlossen wird und vollkommen verschlossen ist, beginnt durch die Aufwärtsbewegung des Kolbens der Kompressionsdruck im Zylinder zu steigen, bis er seinen maximalen Wert erreicht, etwa dann, wenn der Kolben im oberen Totpunkt ist. Daher erfolgt die Brenngaseinspritzung vorzugsweise dann, wenn noch kein besonders grosser Kompressionsdruck im Zylinder herrscht und besonders bevorzugt beginnt die Einspritzung des Brenngases 5 bevor das Auslassventil geschlossen ist.

Aus diesem Grunde ist es bevorzugt, wenn die in der Zylinderwand 41 vorgesehene Gaseinlassdüse 3 bezüglich der axialen Richtung A einen möglichst grossen Abstand vom oberen Totpunkt hat. Andererseits gibt es auch konstruktive Beschränkungen, wo die Gaseinlassdüse 3 angeordnet werden kann. In der Praxis hat es sich als sehr guter Kompromiss erwiesen, wenn die Gaseinlassdüse 3 des Gaszuführsystems 1 auf einer solchen Höhe (bezüglich der axialen Richtung A) angeordnet ist, dass ihr Abstand vom oberen Totpunkt besonders bevorzugt 50% bis 60% des Abstands zwischen oberem und unterem Totpunkt beträgt.

Bezogen auf die Lage der Spülluftschlitze hat es sich als besonders bevorzugt erwiesen, wenn die Gaseinlassdüse 3 auf einer solchen Höhe (bezüglich der axialen Richtung A angeordnet ist, dass ihr Abstand von der Oberkante der Spülluftschlitze ("Oberkante" bezüglich der üblichen Gebrauchslage der Brennkraftmaschine) bevorzugt weniger als 50% und besonders bevorzugt 30% bis 40% des Abstands der Oberkante der Spülluftschlitze vom oberen Totpunkt beträgt.

Die bevorzugte Anordnung der Gaseinlassdüse 3 hat neben der Ermöglichung eines geringen Einspritzdrucks für das Brenngas 5 auch noch den Vorteil, dass bezüglich der axialen Richtung A ein grosser Abstand zwischen der Gaseinlassdüse 3 und dem Gaswechselventil bzw. dem Auslassventil existiert. Hierdurch wird es zum einen vermieden, dass ein wesentlicher Anteil des eingespritzten Brenngases 5 im unverbrannten Zustand durch das Auslassventil entweichen kann und zum anderen hat man mehr Zeit für das Schliessen des Auslassventils.

Ferner ist die bevorzugte Anordnung der Gaseinlassdüse 3 auch im Hinblick auf ein möglichst homogenes Luft/Brenngasgemisch vorteilhaft. Durch die frühe Einspritzung des Brenngases 5 bezogen auf den Kompressionshub des Kolbens haben die Spülluft und das Brenngas genügend Zeit, sich innig zu durchmischen, bevor die Verbrennung des Gemisches beginnt. Dies führt zu einem möglichst optimalen und insbesondere auch schadstoffarmen Verbrennungsprozess im Brennraum 42.

Im Hinblick auf die optimale Durchmischung von Spülluft und Brenngas 5 ist es auch vorteilhaft, wenn - wie bereits erwähnt - das Brenngas 5 bezüglich der radialen Richtung um den von Null verschiedenen Einspritzwinkel β in den Brennraum 42 des Zylinders 4 eingespritzt wird. Hierdurch erfolgt eine besonders intensive Durchmischung mit der Spülluft, die üblicherweise im Zylinder 4 bzw. im Brennraum 42 beim Kompressionshub des Kolbens drallbehaftet ist.

Es können an einem Zylinder natürlich auch zwei oder mehr solcher Gaszuführsysteme 1 bzw. zwei oder mehr Gaseinlassdüsen 3 mit Gaseinlassventilen 2 vorgesehen sein.

## Patentansprüche

1. Zylinder für eine Hubkolbenbrennkraftmaschine, insbesondere längsgespülter Zweitakt-Grossdieselmotor, mit einem Gaszuführsystem, wobei das Gaszuführsystem ein Gaseinlassventil (2) mit einer Gaseinlassdüse (3) umfasst, die so ausgestaltet ist, dass sie in einer Zylinderwand (41) des Zylinders (4) der Hubkolbenbrennkraftmaschine derart angeordnet ist, dass ein als Treibstoff bereitgestelltes Brenngas (5) im Einbauzustand des Gaszuführsystems mittels der Gaseinlassdüse (3) einem Brennraum (42) des Zylinders (4) zuführbar ist, wobei das Gaseinlassventil (2) einen in einem Ventilgehäuse (21) angeordneten Druckraum (22) umfasst, in welchem das Brenngas (5) über eine Gaszuführung (23) zur Bevorratung und Zufuhr in die Gaseinlassdüse (3) im Betriebszustand bereitgestellt werden kann, und im Druckraum (22) ein Ventilkörper (6) mit einem an einem Ventilschaft (61) angeordneten Ventilteller (62) sowie einem Ventilsitz (63) vorgesehen ist, welcher Ventilsitz (63) in einem geschlossenen Zustand des Ventilkörpers (6) mit dem Ventilteller (62) derart dichtend zusammenwirkt, dass die Zufuhr des Brenngases (5) aus dem Druckraum (22) in die Gaseinlassdüse (3) unterbunden ist, und der Ventilteller (62) mittels eines mit dem Ventilschaft (61) wirkverbundenen Ventilantriebs (7) vom Ventilsitz (3) abhebbar ist, so dass das Brenngas (5) in einem geöffneten Zustand des Ventilkörpers (6) aus dem Druckraum (22) am Ventilteller (62) vorbei der Gaseinlassdüse (3) zuführbar ist, wobei zur Überwachung eines Brenngasflusses in den Brennraum (42) ein Kontrollsystem zur Bestimmung einer Position des Ventilkörpers (6) vorgesehen ist, **dadurch gekennzeichnet dass** das Gaszuführsystem in einem Bereich der Zylinderwand (41) zwischen einem oberen Totpunkt und einem unteren Totpunkt eines Kolbens der Hubkolbenbrennkraftmaschine vorgesehen ist, und dass das Kontrollsystem mit einer Überwachungseinheit signalverbunden ist und die Position des Ventilkörpers (6) im Betriebszustand von der Überwachungseinheit erfasst werden kann, so dass eine Brenngaszufuhr zur Gaseinlassdüse (3) in Abhängigkeit von einem Kurbelwinkel der Hubkolbenbrennkraftmaschine und / oder in Abhängigkeit von einer Stellung eines Gaswechselventils der Hubkolbenbrennkraftmaschine unterbunden werden kann.

2. Zylinder nach Anspruch 1, wobei das Kontrollsystem ein Wegsensor ist, insbesondere ein elektrischer oder elektromagnetischer Wegsensor, im Speziellen ein induktiver, kapazitiver oder optischer Wegsensor ist.

3. Zylinder nach einem der vorangehenden Ansprüche, wobei der Ventilantrieb (7) zum Antrieb des Ventilschafts (61) ein mechanischer, elektrischer, oder pneumatischer Ventilantrieb (7), insbesondere ein hydraulischer Ventilantrieb (7) ist.

4. Zylinder nach einem der vorangehenden Ansprüche, wobei zum Schliessen des Ventilkörpers (6) eine gegen den Ventilantrieb (7) wirkende Rückstelleinrichtung (8), insbesondere in Form einer Rückstellfeder (81) vorgesehen ist.

5. Zylinder nach einem der vorangehenden Ansprüche, wobei der Ventilschaft (61) in einer Führungsbohrung (91) eines Schaftgehäuses (9) geführt ist.

6. Zylinder nach Anspruch 5, wobei die Führungsbohrung (91) mit einem unter einem Abdichtdruck (PA) stehenden Hydrauliköl (10) beaufschlagbar ist, welcher Abdichtdruck (PA) höher ist als ein Brenngasdruck (BG) des Brenngases (5) im Druckraum (22), so dass ein Eindringen des Brenngases (5) in die Führungsbohrung (91) im Wesentlichen verhinderbar ist.

7. Zylinder nach einem der vorangehenden Ansprüche, wobei die Gaseinlassdüse (3) lösbar mit dem Gaseinlassventil (2) und austauschbar mit der Zylinderwand (41) verbunden ist und eine Düsenachse (D) der Gaseinlassdüse (3) derart unter einem vorgebbaren Winkel (α) in Bezug auf eine Ventilachse (V) des Gaseinlassventils (2) angeordnet ist, dass das Brenngas (5) im Betriebs- und Einbauzustand des Gaszuführsystems unter einem von Null verschiedenen vorgebbaren Winkel in Bezug auf eine radiale Richtung (R) und / oder in Bezug auf eine axiale Richtung (A) des Zylinders (4) in den Brennraum (42) des Zylinders (4) einspritzbar ist.

8. Zylinder nach Anspruch 7, wobei die Gaseinlassdüse (3) eine Mehrzahl an Düsenöffnungen (31) aufweist.

9. Zylinder nach Anspruch 8, wobei zwei Düsenöffnungen (31) derart verschieden ausgerichtet sind, dass das Brenngas (5) unter zwei verschiedenen Einspritzwinkeln in den Brennraum (42) einbringbar ist.

10. Zylinder nach einem der Ansprüche 7 - 9, wobei zwei Düsenöffnungen (31) derart verschieden ausgebildet sind, dass das Brenngas (5) durch die zwei Düsenöffnungen (31) mit zwei verschiedenen Einspritzmengen und / oder mit zwei verschiedenen Strömungsgeschwindigkeiten und / oder mit zwei verschiedenen Strahlgeometrien in den Brennraum (42) einbringbar ist.

11. Zylinder nach einem der vorangehenden Ansprüche, wobei das Gaszuführsystem (1) am Zylinder (4) in einem Bereich zwischen dem oberen Totpunkt und dem unteren Totpunkt eines Kolbens der Hubkolbenbrennkraftmaschine vorgesehen ist, der vom oberen Totpunkt 20% bis 80%, bevorzugt 45% bis 65%, besonders bevorzugt 50% bis 60% des Abstands zwischen oberem Totpunkt und unterem Totpunkt entfernt ist.

12. Hubkolbenbrennkraftmaschine mit einem Zylinder nach einem der vorangehenden Ansprüche, wobei die Hubkolbenbrennkraftmaschine ein Dual-Fuel Motor zur Verbrennung des Brenngases (5) und alternativ zur Verbrennung eines weiteren Brennstoffs, insbesondere zur Verbrennung von Diesel oder Schweröl ist.

13. Verfahren zum Betreiben einer Hubkolbenbrennkraftmaschine nach Anspruch 12 wobei eine Fehlfunktion des Gaszuführsystems (1) detektiert wird, die Brenngaszufuhr zum Gaszuführsystem (1) unterbunden wird und die Hubkolbenbrennkraftmaschine bevorzugt automatisch abgeschaltet, besonders bevorzugt automatisch auf einen Betrieb mit einem alternativen Brennstoff wie beispielweise Dieselöl oder Schweröl umgeschaltet wird.

## Claims

1. A cylinder for a reciprocating piston internal combustion engine, in particular for a uniflow-scavenged large two-stroke diesel engine, with a gas supply system, wherein the gas supply system comprises a gas inlet valve (2) having a gas inlet nozzle (3), which is configured such that it can be arranged in a cylinder wall (41) of the cylinder (4) of the reciprocating piston internal combustion engine such that a fuel gas (5) provided as fuel can be supplied to a combustion space (42) of the cylinder (4) by means of the gas inlet nozzle (3) in the installed state of the gas supply system, wherein the gas inlet valve (2) comprises a pressure space (22), which is arranged in a valve housing (21), in which pressure space (22) the fuel gas (5) can be provided via a gas supply (23) for storage and supply into the gas inlet nozzle (3) in the operating state, and a valve body (6) having a valve disk (62) arranged at a valve shaft (61) and having a valve seat (63) is provided in the pressure space (22), said valve seat (63) sealingly cooperating with the valve disk (62) in a closed state of the valve body (6) such that the supply of the fuel gas (5) from the pressure space (22) into the gas inlet nozzle (3) is inhibited and the valve disk (62) can be raised from the valve seat (63) by means of a valve drive (7) being in operative communication with the valve shaft (61) such that the fuel gas (5) can be supplied to the gas inlet nozzle (3) from the pressure space (22) past the valve disk (62) in an open state of the valve body (6), wherein a monitoring system for determining a position of the valve body (6) is provided for monitoring a fuel gas flow into the combustion space (42), **characterized in that** the gas supply system is provided in a region of the cylinder wall (41) between a top dead center and a bottom dead center of a piston of the reciprocating piston internal combustion engine, and that the monitoring system is in signal communication with a monitoring unit and the position of the valve body (6) in the operating state can be detected by the monitoring unit such that a fuel gas supply to the gas inlet nozzle (3) can be inhibited in dependence on a crank angle of the reciprocating piston internal combustion engine and/or in dependence on a position of a gas exchange valve of the reciprocating piston internal combustion engine.

2. A cylinder in accordance with claim 1, wherein the monitoring system is a path sensor, in particular an electrical or an electromagnetic path sensor, specifically an inductive, capacitive or optical path sensor.

3. A cylinder in accordance any one of the preceding claims, wherein the valve drive (7) for driving the valve shaft (61) is a mechanical, electrical or pneumatic valve drive (7), in particular a hydraulic valve drive (7).

4. A cylinder in accordance with any one of the preceding claims, wherein a restoration device (8), in particular in the form of a restoration spring (81), acting against the valve drive (7) is provided for closing the valve body (6).

5. A cylinder in accordance with any one of the preceding claims, wherein the valve shaft (61) is guided in a guide bore (91) of a shaft housing (9).

6. A cylinder in accordance with claim 5, wherein the guide bore (91) can be applied with a hydraulic oil (10) at a sealing pressure (PA), said sealing pressure (PA) being higher than a fuel gas pressure (BG) of the fuel gas (5) in the pressure space (22) such that a penetration of the fuel gas (5) into the guide bore (91) can be substantially prevented.

7. A cylinder in accordance with any one of the preceding claims, wherein the gas inlet nozzle (3) is connected releasably to the gas inlet valve (2) and replaceably to the cylinder wall (41) and a nozzle axis (D) of the gas inlet nozzle (3) is arranged at a predefinable angle (α) with respect to a valve axis (V) of the gas inlet valve (2) such that the fuel gas (5) can be injected into the combustion space (42) of the cylinder (4) in the operating and installed state of the gas supply system at a predefinable angle differing from zero with respect to a radial direction (R) and/or with respect to an axial direction (A) of the cylinder (4).

8. A cylinder in accordance with claim 7, wherein the gas inlet nozzle (3) has a plurality of nozzle openings (31).

9. A cylinder in accordance with claim 8, wherein two nozzle openings (31) are aligned differently such that the fuel gas (5) can be introduced into the combustion space (42) at two different injection angles.

10. A cylinder in accordance with any one of the claims 7 to 9, wherein two nozzle openings (31) are configured so differently that the fuel gas (5) can be introduced into the combustion space (42) through the two nozzle openings (31) with two different injection quantities and/or at two different flow speeds and/or with two different jet geometries

11. A cylinder in accordance with any one of the preceding claims, wherein the gas supply system (1) is provided at the cylinder (4) in a region between a top dead center and a bottom dead center of a piston of the reciprocating piston internal combustion engine, which is remote from the top dead center by 20% to 80%, preferably by 45% to 65%, particularly preferably by 50% to 60%, of the spacing between the top dead center and the bottom dead center.

12. A reciprocating piston internal combustion engine with a cylinder in accordance with any one of the preceding claims, wherein the reciprocating piston internal combustion engine is a dual fuel engine for the combustion of the fuel gas (5) and alternatively for the combustion of a further fuel, in particular for the combustion of diesel or of heavy oil.

13. A method of operating a reciprocating piston internal combustion engine in accordance with claim 12, wherein a malfunction of the gas supply system (1) is detected, the fuel gas supply to the gas supply system (1) is inhibited and the reciprocating piston internal combustion engine is preferably automatically switched off, particularly preferred automatically switched to an operation with an alternative fuel such as diesel oil or heavy oil.

## Revendications

1. Un cylindre pour un moteur à combustion interne alternatif, en particulier un grand moteur diesel à deux temps purgé longitudinalement, avec un système d'alimentation en gaz, le système d'alimentation en gaz comprenant une soupape d'entrée de gaz (2) ayant une buse d'entrée de gaz (3), conçu de telle sorte qu'elle est disposée dans un paroi de cylindre (41) du cylindre (4) du moteur à piston à combustion interne de telle manière qu'un gaz combustible (5) fourni comme combustible peut être amené à une chambre de combustion (42) du cylindre (4) par l'intermédiaire de la buse d'entrée de gaz (3) à l'état installé du système d'alimentation en gaz, la soupape d'entrée de gaz (2) comprenant une chambre de pression (22) disposée dans un boîtier de soupape (21), dans laquelle le gaz combustible (5) peut être fourni par l'intermédiaire d'une alimentation en gaz (23) à la buse d'entrée de gaz (3) pour le stockage et l'alimentation en état de fonctionnement, et un corps de soupape (6) avec une plaque de soupape (62) disposée sur une tige de soupape (61) et un siège de soupape (63) est prévu dans la chambre de pression (22), lequel siège de soupape (63), dans un état fermé du corps de soupape (6), coopère avec la plaque de soupape (62) d'une manière étanche de telle sorte que l'alimentation du gaz combustible (5) de la chambre de pression (22) dans la buse d'entrée de gaz (3) est empêchée, et la plaque de soupape (62) peut être soulevée du siège de soupape (3) au moyen d'un commande de soupape (7) relié de manière opérationnelle à la tige de soupape (61), que le gaz combustible (5) peut être amené à la buse d'entrée de gaz (3) de la chambre de pression (22) au-delà de la plaque de soupape (62) à l'état ouvert du corps de soupape (6), dans lequel un système de commande pour déterminer une position du corps de la soupape (6) est prévu pour surveiller un flux de gaz combustible dans la chambre de combustion (42), **caractérisé en ce que** le système d'alimentation en gaz est prévu dans une région du paroi de cylindre (41) entre un point mort supérieur et un point mort inférieur d'un piston du moteur à combustion interne alternatif, et que le système de commande est relié par signal à une unité de surveillance et la position du corps de soupape (6) peut être détectée par l'unité de surveillance dans l'état de fonctionnement de sorte qu'une alimentation en gaz de combustion à la buse d'entrée de gaz (3) peut être empêchée en fonction d'un angle de vilebrequin du moteur à combustion interne alternatif et / ou en fonction d'une position d'une soupape d'échange de gaz du moteur à combustion interne alternatif.

2. Un cylindre selon la revendication 1, dans lequel le système de commande est un capteur de déplacement, en particulier un capteur de déplacement électrique ou électromagnétique, en spécial un capteur de déplacement inductif, capacitif ou optique.

3. Un cylindre selon l'une des revendications précédentes, dans lequel le commande de soupape (7) pour commander la tige de soupape (61) est une commande de soupape (7) mécanique, électrique ou pneumatique, en particulier une commande de soupape (7) hydraulique.

4. Un cylindre selon l'une des revendications précédentes, dans lequel un dispositif de rappel (8) agissant contre la commande de soupape (7), en particulier sous la forme d'un ressort de rappel (81), est prévu pour fermer le corps de soupape (6).

5. Un cylindre selon l'une des revendications précédentes, dans lequel la tige de soupape (61) est guidé dans un alésage de guidage (91) d'un boîtier d'arbre (9).

6. Un cylindre selon la revendication 5, dans lequel l'alésage de guidage (91) peut être appliqué avec une huile hydraulique (10) sous une pression d'étanchéité (PA), ladite pression d'étanchéité (PA) est supérieure à une pression de gaz combustible (BG) du gaz combustible (5) dans la chambre de pression (22), de sorte qu'une pénétration du gaz combustible (5) dans l'alésage de guidage (91) peut être sensiblement empêchée.

7. Un cylindre selon l'une des revendications précédentes, dans lequel la buse d'entrée de gaz (3) est reliée de manière amovible à la soupape d'entrée de gaz (2) et reliée de manière interchangeable à la paroi du cylindre (41) et un axe de buse (D) de la buse d'entrée de gaz (3) est disposé selon un angle prédéterminable (α) par rapport à un axe de soupape (V) de la soupape d'entrée de gaz (2) de telle sorte que le gaz combustible (5) peut être injecté dans la chambre de combustion (42) du cylindre (4) à un angle prédéterminable différent de zéro par rapport à une direction radiale (R) et / ou par rapport à une direction axiale (A) du cylindre (4) dans l'état de fonctionnement et d'installation du système d'alimentation en gaz.

8. Un cylindre selon la revendication 7, dans lequel la buse d'entrée de gaz (3) a une pluralité d'ouvertures de buse (31).

9. Un cylindre selon la revendication 8, dans lequel deux ouvertures de buse (31) sont alignés différemment de telle sorte que le gaz combustible (5) peut être introduit dans la chambre de combustion (42) sous deux angles d'injection différents.

10. Un cylindre selon l'une des revendications 7 à 9, dans lequel deux ouvertures de buse (31) sont si différemment conçues, que le gaz combustible (5) peut être introduit dans la chambre de combustion (42) par les deux ouvertures de buse (31) avec deux quantités d'injection différentes et / ou avec deux vitesses d'écoulement différentes et / ou avec deux géométries de jets différentes.

11. Un cylindre selon l'une des revendications précédentes, dans lequel le système d'alimentation en gaz (1) est prévu sur le cylindre (4) dans une région entre le point mort supérieur et le point mort inférieur d'un piston du moteur à combustion interne alternatif, qui est éloigné du point mort supérieur de 20% à 80%, de préférence de 45% à 65%, surtout de préférence de 50% à 60% de la distance entre le point mort supérieur et le point mort inférieur.

12. Un moteur à combustion interne alternatif avec un cylindre selon l'une des revendications précédentes, dans lequel le moteur à combustion interne alternatif est un moteur à deux carburants pour la combustion du gaz de combustion (5) et alternativement pour la combustion d'un autre carburant, en particulier pour la combustion de diesel ou de pétrole lourd.

13. Un procédé de fonctionnement d'un moteur à combustion interne alternatif selon la revendication 12, dans lequel un dysfonctionnement du système d'alimentation en gaz (1) est détecté, l'alimentation en gaz combustible du système d'alimentation en gaz (1) est empêchée et le grand moteur est de préférence coupé automatiquement, en particulier de préférence automatiquement commuté sur un fonctionnement avec un carburant de substitution tel que le diesel ou le pétrole lourd.
